# EUROPÄISCHE PATENTSCHRIFT

(11) **EP 3 290 299 B1**
(45) Veröffentlichungstag und Bekanntmachung des Hinweises auf die Patenterteilung: **20.11.2019**
(21) Anmeldenummer: 17171192.2
(22) Anmeldetag: 16.05.2017
(51) Int. Cl.: B62D 9/00

(54) **LANDWIRTSCHAFTLICHE ARBEITSMASCHINE**
AGRICULTURAL WORK MACHINE
ENGIN AGRICOLE

(30) Priorität: 05.09.2016 DE 102016116556
(43) Veröffentlichungstag der Anmeldung: 07.03.2018
(73) Patentinhaber: CLAAS Tractor S.A.S., 78141 Vélizy-Villacoublay Cedex (FR)
(72) Erfinder: Bacle, Thibault, 26300 Chateauneuf sur Isere (FR)
(74) Vertreter: CLAAS Gruppe

(56) Entgegenhaltungen:
- WO-A1-89/07545

## Beschreibung

Die Erfindung betrifft eine landwirtschaftliche Arbeitsmaschine, insbesondere einen Traktor, mit einem Chassis und einer Vorderachsbaugruppe gemäß dem Oberbegriff des Anspruches 1.

Bei landwirtschaftlichen Arbeitsmaschinen wie Traktoren sind Achsbaugruppen bekannte Bauteile. Eine Vorderachsbaugruppe beispielsweise umfasst üblicherweise neben einer Vorderachse mit daran lenkbar angeordneten Vorderrädern auch eine Vorderachsstütze, welche zur Abstützung der Vorderachse an dieser und einem Chassis der Arbeitsmaschine gelagert ist. Die Vorderachsbaugruppe ist hierdurch relativ zu dem Chassis beweglich und kann sich somit Bodenunebenheiten anpassen, ohne dass das Chassis der Arbeitsmaschine jeder Bewegung der Vorderachse folgen muss, insbesondere bei Lenkbewegungen der Vorderräder. Eine Antriebswelle, welche ein Drehmoment von einem Antriebsmotor auf eine solche Vorderachse überträgt, ist dabei ebenfalls beweglich ausgebildet, um den Bewegungen der Vorderachsbaugruppe folgen zu können. An landwirtschaftliche Arbeitsmaschinen werden oftmals hohe Anforderungen an die Wendigkeit gestellt, damit auch Arbeiten in beengten Verhältnissen, beispielsweise auf einem Hof oder auf ungünstig geschnittenen Feldern, möglich sind. Durch den steigenden Leistungsbedarf der Arbeitsmaschinen werden zunehmend leistungsstärkere Antriebsmotoren eingesetzt, welche mehr Bauraum benötigen und das Einrüsten größerer Abgasnachbehandlungseinrichtungen erforderlich machen. Durch den erhöhten Bauraumbedarf kann es zu einer Beeinträchtigung der Lenkung und damit der Wendigkeit der Arbeitsmaschine kommen.

Aus der EP 1 006 015 B1 ist ein Traktor bekannt, bei dem eine Vorderachsstütze an ihrem vorderen Ende mit einem Gehäuse der Vorderachsbaugruppe befestigt und an ihrem hinteren Ende mit einem Widerlager schwenkbar verbunden ist, das an einer Bodenplatte des Chassis unterhalb der Fahrerkabine befestigt ist. Durch die Beweglichkeit der Vorderachsbaugruppe kann es jedoch beim Betrieb des Traktors zu unerwünschten seitlichen Bewegungen zwischen der Vorderachsbaugruppe und dem Chassis kommen, welche den Fahrkomfort beeinträchtigen können. Diese seitlichen Bewegungen der Vorderachsbaugruppe relativ zu dem Chassis können durch den Einsatz von Stabilisatoren nur teilweise vermindert werden.

Aus der WO89/07545 A1 ist eine landwirtschaftliche Arbeitsmaschine gemäß dem Oberbegriff des Anspruches 1 bekannt.

Es ist daher die Aufgabe der vorliegenden Erfindung, eine landwirtschaftliche Arbeitsmaschine bereitzustellen, welche eine Verbesserung der Wendigkeit der Arbeitsmaschine sowie eine Erhöhung des Fahrkomforts ermöglicht.

Die Lösung der Aufgabe erfolgt erfindungsgemäß durch die kennzeichnenden Merkmale des Anspruchs 1. Vorteilhafte Ausgestaltungen der Erfindung sind in den Unteransprüchen angegeben.

Eine landwirtschaftliche Arbeitsmaschine, insbesondere ein Traktor, umfasst ein Chassis und eine Vorderachsbaugruppe mit einer Vorderachse und daran angeordneten, lenkbaren Vorderrädern und einer Vorderachsstütze, welche starr mit der Vorderachse und schwenkbar mit einem Widerlager an dem Chassis verbunden ist. Dabei ist mindestens ein Aktor zum seitlichen Verschwenken der Vorderachsbaugruppe vorgesehen, wobei der Aktor an der Vorderachse und an dem Chassis angelenkt ist. Durch den mindestens einen Aktor kann ein definiertes seitliches Verschwenken der Vorderachsbaugruppe erfolgen, was den Vorteil bietet, dass eine unerwünschte seitliche Relativbewegung zwischen der Vorderachsbaugruppe und dem Chassis durch den Aktor kompensierbar ist, wodurch der Fahrkomfort erhöht werden kann. Weiterhin ermöglicht der mindestens eine Aktor ein definiertes seitliches Verschwenken der gesamten Vorderachsbaugruppe um das Widerlager, wodurch bei einem Lenkvorgang das kurveninnere Vorderrad von dem Chassis wegbewegt werden kann. Hierdurch kann der Lenkwinkel der Vorderräder vergrößert werden, wodurch die die Wendigkeit der Arbeitsmaschine vorteilhaft erhöht werden kann.

In einer bevorzugten Ausgestaltung der Erfindung ist die Vorderachsbaugruppe unabhängig von einer Lenkbewegung der Vorderräder durch den mindestens einen Aktor seitlich verschwenkbar. Dieses lenkwinkelunabhängige Verschwenken ermöglicht eine Verschwenkung der Vorderachsbaugruppe mit unverändertem Lenkwinkel, wodurch beispielsweise ein Lenkausgleich am Hang zum Beibehalten der gewünschten Fahrtrichtung erfolgen kann. Eine Lenkbewegung zur Fahrtrichtungsänderung kann dabei nach einem Verschwenken der Vorderachsbaugruppe erfolgen.

Besonders bevorzugt ist der Aktor längenveränderbar und insbesondere in Form eines längenveränderbaren Panhardstabes ausgebildet. Ein im Wesentlichen quer zu einer Fahrtrichtung und jeweils an dem Chassis und der Vorderachse angelenkter, Aktor kann auf bauraumsparende Weise in die Arbeitsmaschine integriert werden. Hierdurch kann neben einer Stabilisierung der Vorderachsbaugruppe, insbesondere bei einer Geradeausfahrt, eine Verschwenkung der gesamten Vorderachsbaugruppe, beispielsweise um einen größeren Lenkwinkel der Vorderräder zu erreichen, ermöglicht werden.

In einer bevorzugten Ausgestaltung der Erfindung ist bei einer Kippbewegung und/oder einer Vertikalbewegung der Vorderachsbaugruppe relativ zu dem Chassis ein seitlicher Versatz der Vorderachsbaugruppe durch eine Längenänderung des Aktors ausgleichbar. Hierdurch kann eine stabilisierende Funktion des wie ein Panhardstab wirkenden Aktors weiter verbessert werden.

In einer weiteren bevorzugten Ausgestaltung der Erfindung weist die Vorderachsbaugruppe mindestens einen Lenkzylinder zur Lenkung der Vorderräder auf und der Aktor ist an einer dem Lenkzylinder gegenüberliegenden Seite der Vorderachse angeordnet. Dies ermöglicht besonders in vertikaler Richtung eine bauraumsparende Anordnung des mindestens einen Lenkzylinders und des Aktors an der Vorderachse, wodurch beispielsweise eine Verringerung der Bodenfreiheit vermieden werden kann.

Vorteilhafterweise ist der Aktor in Fahrtrichtung vor der Vorderachse und/oder der Vorderachsbaugruppe angeordnet. Hierdurch wird der verfügbare Bauraum effizient genutzt und der Aktor kann beispielsweise höher angeordnet werden als in dem beengten Bauraum zwischen Vorderachse und beispielsweise Antriebsmotor. Zudem ist der Aktor gut zugänglich, um beispielsweise Wartungsarbeiten durchführen zu können.

Die Vorderachsbaugruppe weist vorteilhafterweise einen Watt-Mechanismus auf, welcher zum seitlichen Verschwenken der Vorderachsbaugruppe durch zwei Aktoren längenveränderbar ist. Durch den Watt-Mechanismus kann eine verbesserte Stabilisierung der Vorderachsbaugruppe gegen seitliches Verschieben bei einer vertikalen Bewegung der Vorderachsbaugruppe erreicht werden. Der Watt-Mechanismus weist dabei ein sogenanntes Wattgestänge auf, welches zwei Stäbe umfasst, die jeweils mit einem Ende an dem Chassis und dem anderen Ende an der Vorderachsbaugruppe angelenkt sind. Die Länge der Stäbe ist jeweils durch einen Aktor veränderbar. Durch eine gleichförmige und entgegengesetzte Längenänderung der beiden Aktoren kann eine seitliche Verschiebung des Wattgestänges und damit der Vorderachsbaugruppe bewirkt werden.

Gemäß der Erfindung ist das Widerlager in Form eines lösbar mit dem Chassis, insbesondere einem Kupplungsgehäuse oder Getriebeblock, verbundenes Brückenteil ausgebildet. Neben einer vereinfachten Montage der Vorderachsbaugruppe bietet das Brückenteil den Vorteil, dass das Widerlager, um welches ein seitliches Verschwenken der Vorderachsbaugruppe erfolgt, beabstandet zu dem Chassis angeordnet ist, wodurch eine Kollision der verschwenkten Vorderachsbaugruppe mit dem Chassis vermieden werden kann.

In einer besonders bevorzugten Ausgestaltung der Erfindung ist der mindestens eine Aktor in Form eines Linearantriebes, eines Hydraulikzylinders oder eines elektromechanischen Linearantriebes ausgebildet.

Nachfolgend wird die Erfindung unter Bezugnahme auf die anliegenden Zeichnungen näher erläutert.

Es zeigt:
- Fig. 1:: eine schematische Seitenansicht einer landwirtschaftlichen Arbeitsmaschine mit einem erfindungsgemäßen Aktor;
- Fig. 2:: eine schematische Darstellung einer Vorderachsbaugruppe mit dem Aktor in einem unverschwenkten Zustand; und
- Fig. 3:: eine schematische Darstellung der Vorderachsbaugruppe gemäß Fig. 2 in einem verschwenkten Zustand mit eingeschlagenen Vorderrädern.

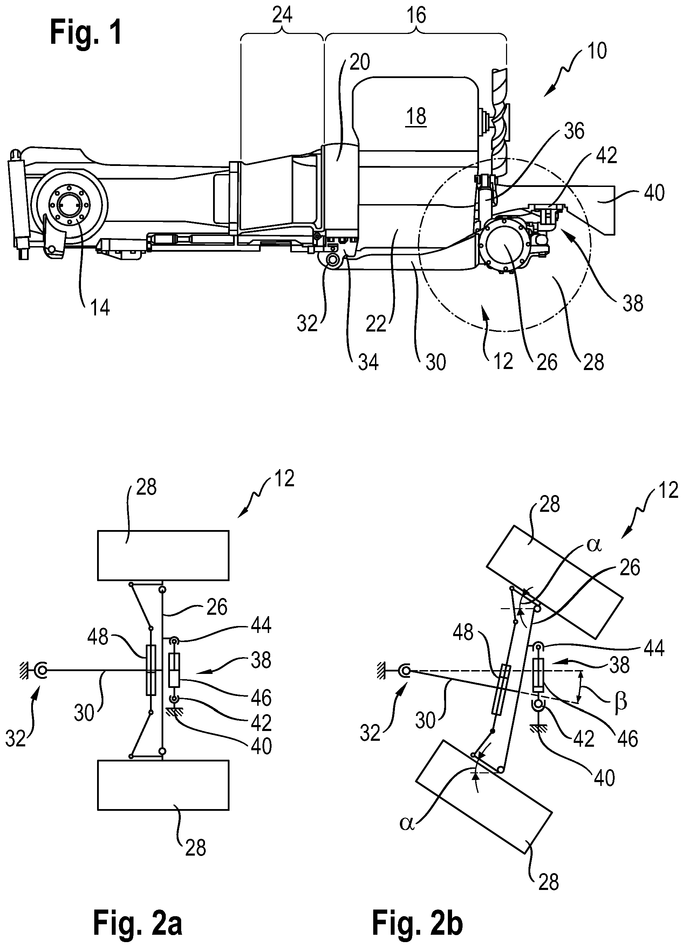

In Fig. 1 ist in einer Seitenansicht ein Chassis 10 einer erfindungsgemäßen landwirtschaftlichen Arbeitsmaschine in Form eines Traktors dargestellt, wobei das Chassis 10 neben einer Vorderachsbaugruppe 12 eine Hinterachsbaugruppe 14 aufweist. Ein vorderer Teil des Chassis 10 wird durch einen Motorblock 16 gebildet, welcher einen Antriebsmotor 18, ein an eine Rückseite des Antriebsmotors 18 anschließendes Kupplungsgehäuse 20 und eine unterhalb des Antriebsmotors 18 angeordnete Ölwanne. Rückseitig an dem Kupplungsgehäuse 20 ist ein Getriebeblock 24 angeordnet. Der Getriebeblock 24 umfasst ein von dem Antriebsmotor 18 über die Kupplung des Kupplungsgehäuses 20 angetriebenes Getriebe, sowie ein Verteilergetriebe, welches das Drehmoment des Antriebsmotors 18 auf die rückseitig mit dem Getriebeblock 24 starr verbundene Hinterachsbaugruppe 14, Zapfwellen des Traktors, sowie über eine Kardanwelle an die Vorderachsbaugruppe 12 verteilt.

Die Vorderachsbaugruppe 12 umfasst neben einer Vorderachse 26 mit daran angeordneten lenkbaren Vorderrädern 28 eine Vorderachsstütze 30. Die Vorderachsstütze 30 ist an einem Ende starr mit der Vorderachse 26 verbunden und mit dem anderen Ende gelenkig in einem Widerlager 32 an dem Chassis 10 angelenkt. Die Vorderachsstütze 30 überspannt in einem montierten Zustand zumindest den Antriebsmotor 18 und die Ölwanne 22. Das Widerlager 32 ist dabei in Form eines Brückenteils 34 ausgebildet, welches eine Kardanwelle überspannt, und lösbar an dem Kupplungsgehäuse 20 angeordnet. Die Vorderachse 26 ist über zwei Federbeine 36 mit dem Motorblock 16 verbunden und so relativ zu dem Motorblock 16 sowohl in vertikaler Richtung als auch um eine Längsrichtung des Traktors orientierte Achse pendelnd beweglich gelagert ist. Die Vorderachsbaugruppe 12 zusätzlich um eine im Wesentlichen senkrechte, durch das Widerlager verlaufende, Achse seitlich verschwenkbar ausgebildet.

Gemäß der Erfindung ist mindestens ein Aktor 38 (Fig. 2a) zum seitlichen Verschwenken der Vorderachsbaugruppe 12 vorgesehen. Die Vorderachsbaugruppe 12 kann dabei mit unverändertem Lenkwinkel seitlich verschwenkt werden, insbesondere mit einer daran anschließenden Lenkbewegung der Vorderräder 28. Der Aktor 38 ist zwischen dem Chassis 10, insbesondere einem Frontabschnitt 40 des Chassis 10, und der Vorderachse 26 angeordnet. Gelagert ist der Aktor 38 dabei chassisseitig in einer ersten Gelenkverbindung 42 und vorderachsseitig in einer zweiten Gelenkverbindung 44, welche mit der Vorderachse 26 verbunden ist. Der Aktor 38 ist als doppelt wirkender Hydraulikzylinder 46 ausgelegt, wobei beispielsweise auch eine Ausgestaltung des Aktors 38 in Form eines elektrischen oder elektromechanischen Linearantriebes denkbar ist. Eine Ansteuerung des Aktors 38 und damit ein Verschwenken der Vorderachsbaugruppe 12 um das Widerlager 32 kann durch eine Steuereinheit (nicht dargestellt) unabhängig von einer Lenkbewegung der Vorderräder 28 erfolgen. Zur Lenkung der Vorderräder 28 ist ein widerlagerseitig und/oder an einer Hinterseite der Vorderachse 26 angeordneter Lenkzylinder 48 in Form eines Gleichlaufzylinders vorgesehen. Der Lenkzylinder 48 und der Aktor 38 sind dabei an einander gegenüberliegenden Seiten der Vorderachse 26 angeordnet. Der Aktor 38 ist dabei im Wesentlichen waagerecht und quer zu einer Längsrichtung der Arbeitsmaschine angeordnet und wirkt wie ein Panhardstab. Durch eine Längenänderung des Aktors 38 kann eine seitliche Bewegung des Chassis 10 bei einer vertikalen Relativbewegung zwischen der Vorderachse 26 und dem Chassis 10 kompensiert werden.

In Figur 2b ist die Vorderachsbaugruppe 12 in einer seitlich um das Widerlager 32 verschwenkten Position dargestellt. Durch den Aktor 38 ist die Vorderachsbaugruppe 12, insbesondere mit unverändertem Lenkwinkel a um den Schwenkwinkel β verschwenkt. Eine Lenkung der Vorderräder 28 kann dabei nach einer Verschwenkung der Vorderachsbaugruppe 12 erfolgen, wobei die Vorderräder 28 um den Lenkwinkel a ausgelenkt werden. Durch das separate Verschwenken der Vorderachsbaugruppe 12 mit unverändertem Lenkwinkel a kann beispielsweise bei Arbeiten am Hang die Fahrtrichtung der Arbeitsmaschine lenkbewegungsfrei beibehalten werden. Die Verschwenkung um den Schwenkwinkel β der Vorderachsbaugruppe 12 kann dabei automatisch erfolgen, beispielsweise durch eine Steuereinheit insbesondere in Verbindung mit einer Navigationseinheit. Durch das Verschwenken der Vorderachsbaugruppe 12 kann ein Abstand zwischen einem kurveninneren Vorderrad 28 und dem Chassis 10 vergrößert werden, wodurch das Vorderrad 28 weiter eingeschlagen werden kann und somit ein größerer Lenkwinkel a ermöglicht wird. Eine Kombination der Verschwenkung um den Schwenkwinkel β mit einem Lenken der Vorderräder um den Lenkwinkel a kann somit zu einer verbesserten Wendigkeit der Arbeitsmaschine führen.

### Bezugszeichenliste

- 10: Chassis
- 12: Vorderachsbaugruppe
- 14: Hinterachsbaugruppe
- 16: Motorblock
- 18: Antriebsmotor
- 20: Kupplungsgehäuse
- 22: Ölwanne
- 24: Getriebeblock
- 26: Vorderachse
- 28: Vorderrad
- 30: Vorderachsstütze
- 32: Widerlager
- 34: Brückenteil
- 36: Federbein
- 38: Aktor
- 40: Frontabschnitt
- 42: erste Gelenkverbindung
- 44: zweite Gelenkverbindung
- 46: Hydraulikzylinder
- 48: Lenkzylinder

- α: Lenkwinkel
- β: Schwenkwinkel

## Patentansprüche

1. Landwirtschaftliche Arbeitsmaschine, insbesondere ein Traktor, mit einem Chassis (10) und einer Vorderachsbaugruppe (12) mit einer Vorderachse (26) und daran angeordneten, lenkbaren Vorderrädern (28) und einer Vorderachsstütze (30), welche starr mit der Vorderachse (26) und schwenkbar mit einem Widerlager (32) am Chassis (10) verbunden ist, wobei mindestens ein Aktor (38) zum seitlichen Verschwenken der Vorderachsbaugruppe (12) vorgesehen ist, wobei der Aktor (38) an der Vorderachse (26) und dem Chassis (10) angelenkt ist, **dadurch gekennzeichnet, dass** das Widerlager (32) in Form eines lösbar mit dem Chassis (10) verbundenen Brückenteils (34) ausgebildet ist und dass das Widerlager (32), um welches ein seitliches Verschwenken der Vorderachsbaugruppe (12) erfolgt, durch das Brückenteil (34) beabstandet zu dem Chassis (10) angeordnet ist.

2. Arbeitsmaschine nach Anspruch 1, **dadurch gekennzeichnet, dass** die Vorderachsbaugruppe (12) unabhängig von einer Lenkbewegung der Vorderräder (28) durch den mindestens einen Aktor (38) seitlich verschwenkbar ist.

3. Arbeitsmaschine nach Anspruch 1 oder 2, **dadurch gekennzeichnet, dass** der Aktor (38) längenveränderbar ist und insbesondere in Form eines längenveränderbaren Panhardstabes ausgebildet ist.

4. Arbeitsmaschine nach einem der vorherigen Ansprüche, **dadurch gekennzeichnet, dass** bei einer Kippbewegung und/oder einer Vertikalbewegung der Vorderachsbaugruppe (12) relativ zu dem Chassis (10) ein seitlicher Versatz der Vorderachsbaugruppe (12) durch eine Längenänderung des Aktors (38) ausgleichbar ist.

5. Arbeitsmaschine nach einem der vorherigen Ansprüche, **dadurch gekennzeichnet, dass** die Vorderachsbaugruppe (12) mindestens einen Lenkzylinder (48) zur Lenkung der Vorderräder (28) aufweist und der Aktor (38) an einer dem Lenkzylinder (48) gegenüberliegenden Seite der Vorderachse (26) angeordnet ist.

6. Arbeitsmaschine nach einem der vorherigen Ansprüche, **dadurch gekennzeichnet, dass** der Aktor in Fahrtrichtung vor der Vorderachse (26) und/oder der Vorderachsbaugruppe (12) angeordnet ist.

7. Arbeitsmaschine nach einem der vorherigen Ansprüche, **dadurch gekennzeichnet, dass** die Vorderachsbaugruppe (12) einen Watt-Mechanismus aufweist, welcher zum seitlichen Verschwenken der Vorderachsbaugruppe (12) durch zwei Aktoren (38) längenveränderbar ist.

8. Arbeitsmaschine nach einem der vorherigen Ansprüche, **dadurch gekennzeichnet, dass** das Widerlager (32) in Form eines lösbar mit einem Kupplungsgehäuse (20) oder Getriebeblock (24) verbundenen Brückenteils (34) ausgebildet ist.

9. Arbeitsmaschine nach einem der vorherigen Ansprüche, **dadurch gekennzeichnet, dass** der mindestens eine Aktor (38) in Form eines Linearantriebes, eines Hydraulikzylinders (46) oder eines elektromechanischen Linearantriebes ausgebildet ist.

## Claims

1. An agricultural working machine, in particular a tractor, with a chassis (10) and a front axle assembly (12) with a front axle (26) and steerable front wheels (28) disposed thereon and a front axle prop (30), which is rigidly connected to the front axle (26) and pivotably connected to an abutment (32) on the chassis (10), wherein at least one actuator (38) is provided for lateral pivoting of the front axle assembly (12), wherein the actuator (38) is articulated on the front axle (26) and the chassis (10), **characterized in that** the abutment (32) is configured in the form of a bridge section (34) which is releasably connected to the chassis (10) and **in that** the abutment (32), about which lateral pivoting of the front axle assembly (12) occurs, is disposed at a distance from the chassis (10) by means of the bridge section (34).

2. The working machine according to claim 1, **characterized in that** the front axle assembly (12) can be pivoted laterally by means of the at least one actuator (38) independently of a steering movement of the front wheels (28).

3. The working machine according to claim 1 or claim 2, **characterized in that** the actuator (38) is variable in length and in particular is in the form of a variable length Panhard rod.

4. The working machine according to one of the preceding claims, **characterized in that** during a tilting movement and/or a vertical movement of the front axle assembly (12) relative to the chassis (10), a lateral displacement of the front axle assembly (12) can be compensated for by a variation in the length of the actuator (38).

5. The working machine according to one of the preceding claims, **characterized in that** the front axle assembly (12) comprises at least one steering cylinder (48) for steering the front wheels (28) and the actuator (38) is disposed on a side of the front axle (26) which is opposite to the steering cylinder (48).

6. The working machine according to one of the preceding claims, **characterized in that** the actuator is disposed in front of the front axle (26) and/or the front axle assembly (12) in the direction of travel.

7. The working machine according to one of the preceding claims, **characterized in that** the front axle assembly (12) comprises a Watt mechanism the length of which can be varied by means of two actuators (38) for lateral pivoting of the front axle assembly (12).

8. The working machine according to one of the preceding claims, **characterized in that** the abutment (32) is configured in the form of a bridge section (34) which is releasably connected to a clutch housing (20) or a transmission block (24).

9. The working machine according to one of the preceding claims, **characterized in that** the at least one actuator (38) is configured in the form of a linear actuator, a hydraulic cylinder (46) or an electromechanical linear actuator.

## Revendications

1. Machine de travail agricole, en particulier un tracteur, comprenant un châssis (10) et un ensemble d'essieu avant (12) avec un essieu avant (26) et des roues avant directrices (28) montées dessus et avec un support d'essieu avant (30) qui est relié de manière rigide à l'essieu avant (26) et de manière pivotante à un contre-appui (32) sur le châssis (10), au moins un actionneur (38) étant prévu pour le pivotement latéral de l'ensemble d'essieu avant (12), l'actionneur (38) étant articulé sur l'essieu avant (26) et sur le châssis (10), **caractérisée en ce que** le contre-appui (32) est conçu sous la forme d'une partie de pont (34) reliée de façon amovible au châssis (10), et **en ce que** le contre-appui (32) autour duquel s'effectue un pivotement latéral de l'ensemble d'essieu avant (12) est disposé, en raison de la partie de pont (34), à distance du châssis (10).

2. Machine de travail selon la revendication 1, **caractérisée en ce que** l'ensemble d'essieu avant (12) peut pivoter latéralement par l'intermédiaire du au moins un actionneur (38) indépendamment d'un mouvement de direction des roues avant (28).

3. Machine de travail selon la revendication 1 ou 2, **caractérisée en ce que** l'actionneur (38) est variable en longueur et est conçu en particulier sous la forme d'une barre Panhard variable en longueur.

4. Machine de travail selon une des revendications précédentes, **caractérisée en ce qu'**en cas de mouvement basculant et/ou de mouvement vertical de l'ensemble d'essieu avant (12) par rapport au châssis (10), un déport latéral de l'ensemble d'essieu avant (12) est compensable par l'intermédiaire d'une variation de longueur de l'actionneur (38).

5. Machine de travail selon une des revendications précédentes, **caractérisée en ce que** l'ensemble d'essieu avant (12) comporte au moins un vérin de direction (48) pour diriger les roues avant (28), et l'actionneur (38) est disposé sur un côté de l'essieu avant (26) situé à l'opposé du vérin de direction (48).

6. Machine de travail selon une des revendications précédentes, **caractérisée en ce que** l'actionneur est disposé, par rapport au sens de la marche, devant l'essieu avant (26) et/ou devant l'ensemble d'essieu avant (12).

7. Machine de travail selon une des revendications précédentes, **caractérisée en ce que** l'ensemble d'essieu avant (12) comporte un mécanisme de Watt qui, pour le pivotement latéral de l'ensemble d'essieu avant (12), est variable en longueur par l'intermédiaire de deux actionneurs (38) .

8. Machine de travail selon une des revendications précédentes, **caractérisée en ce que** le contre-appui (32) est conçu sous la forme d'une partie de pont (34) reliée de façon amovible à un carter d'embrayage (20) ou à un bloc de transmission (24).

9. Machine de travail selon une des revendications précédentes, **caractérisée en ce que** le au moins un actionneur (38) est conçu sous la forme d'un entraînement linéaire, d'un vérin hydraulique (46) ou d'un entraînement linéaire électromécanique.
